# EUROPÄISCHE PATENTSCHRIFT

(11) **EP 0 995 052 B1**
(45) Veröffentlichungstag und Bekanntmachung des Hinweises auf die Patenterteilung: **28.05.2003**
(21) Anmeldenummer: 99944109.0
(22) Anmeldetag: 07.05.1999
(51) Int. Cl.: F16F 13/10

(54) **ZWEIKAMMER-MOTORLAGER**
TWO-CHAMBER ENGINE BEARER
SUPPORT MOTEUR A DEUX CHAMBRES

(30) Priorität: 13.05.1998 DE 19821508
(43) Veröffentlichungstag der Anmeldung: 26.04.2000
(73) Patentinhaber: Trelleborg Automotive Technical Centre GmbH, 56203 Höhr-Grenzhausen (DE)
(72) Erfinder: STILLER, Ulrich, D-56734 Weibern (DE); GUGSCH, Mathias, D-56587 Stra enhaus (DE)
(74) Vertreter: Preissner, Nicolaus, Dipl.-Ing.
(86) Internationale Anmeldenummer: EP9903161
(87) Internationale Veröffentlichungsnummer: WO99058875

(56) Entgegenhaltungen:
- EP-A1- 0 277 056
- EP-A1- 0 534 124
- EP-A2- 0 271 894
- DE-C1- 4 326 425

## Beschreibung

Die vorliegende Erfindung betrifft ein Zweikammer-Motorlager, insbesondere für Kraftfahrzeuge, mit einem Gehäuse, in dessen Innenraurn eine Tragfeder aus gummielastischem Material aufgenommen ist, die den Innenraum des Gehäuses in eine Arbeitskammer und eine gegenüber der Umgebung durch eine gummielastische Membran abgeschlossene Ausgleichskammer unterteilt, wobei die Arbeitskammer und die Ausgleichskammer mit einer hydraulischen Flüssigkeit gefüllt und über einen Überströmkanal miteinander verbunden sind.

Ein derartiges Zweikammer-Motorlager ist aus der EP-A 0 253 373 bekannt. Bei diesem bekannten Zweikammer-Motorlager ist eine Tragfeder aus gummielastischem Material in einem zylindrischen Gehäuse aufgenommen. Die Tragfeder unterteilt den Innenraum des Gehäuses in eine Arbeitskammer und eine am Außenumfang der Tragfeder angeordnete Ausgleichskammer, die über einen Überströmkanal verbunden sind. In die Tragfeder ist ein Lagerkern einvulkanisiert, der zur Befestigung an einem Motor dient. An dem Lagerkern ist ein Flansch angebracht, der das Gehäuse außenseitig mit Spiel übergreift und als Axialanschlag dient. Dieser Flansch ist ein zusätzliches Bauteil, das aufwendig montiert werden muß. Gleichzeitig steigen das Gewicht und die Gesamtabmessungen des Lagers.

Aufgabe der vorliegenden Erfindung ist es daher, ein bekanntes Zweikammer-Motorlager dahingehend weiterzubilden, daß bei geringen Abmessungen und einfacher Montage ein Radialanschlag für die Tragfeder bereitgestellt wird.

Erfindungsgemäß wird diese Aufgabe bei einem Zweikammer-Motorlager der eingangs genannten Art dadurch gelöst, daß in der Ausgleichskammer mindestens ein als Radialanschlag ausgebildeter und zusätzlich zur hochfrequenten Entkoppelung dienender Panscher vorgesehen ist.

Der erfindungsgemäß vorgesehene Panscher verbessert das akustische Verhalten im höherfrequenten Frequenzbereich, insbesondere in dem Frequenzbereich zwischen 80 und 160 Hz. Der Panscher bewirkt eine erhebliche Absenkung der dynamischen Steifigkeit in dem gewünschten Frequenzbereich, oftmals bis unter den Wert der statischen Steifigkeit. Diese Absenkung wird als hochfrequente Entkopplung bezeichnet. Gleichzeitig wirkt der Panscher als Radialanschlag.

Vorteilhafte Weiterbildungen und Ausgestaltungen der Erfindung ergeben sich aus den Unteransprüchen.

Bei einer ersten Ausgestaltung wird die Arbeitskammer vorteilhaft von der Tragfeder und dem Gehäuse begrenzt. Die Ausgleichskammer umgibt die Arbeitskammer und wird von der Tragfeder, dem Gehäuse und einer gummielastischen Membran begrenzt. Ein derartiges Lager wird auch als "Topflager" bezeichnet.

Gemäß einer weiteren Ausgestaltung ist der Panscher einteilig mit der Tragfeder ausgebildet. Diese einteilige Ausbildung erleichtert die Herstellung und Montage des erfindungsgemäßen Zweikammer-Motorlagers. Der Panscher wird bei der Herstellung der Tragfeder in einem Arbeitsgang an den Lagerkern anvulkanisiert.

Nach einer weiteren Ausgestaltung der vorliegenden Erfindung ist der Panscher getrennt von der Tragfeder an einer Außenwand der Ausgleichskammer angeordnet. Der Panscher wird bei dieser Ausgestaltung zwar als separates Bauteil hergestellt, kann aber rasch und einfach an der Außenwand der Ausgleichskammer angeordnet werden.

Eine andere Ausgestaltung sieht eine Kombination dieser beiden Panscher vor. In diesem Fall wirkt ein einteilig mit der Tragfeder ausgebildeter Panscher mit einem an der Außenwand der Ausgleichskammer angeordneten Panscher zusammen.

In allen Ausgestaltungen wird durch den oder die Panscher eine hochfrequente Entkopplung erreicht. Wesentlich für die hochfrequente Entkopplung ist der Panscherspalt, der sich zwischen dem Panscher und der Außenwand der Arbeitskammer oder der Tragfeder oder zwischen den beiden Panschern bildet. Die Abmessungen dieses Panscherspalts sind eine wesentliche Kenngröße für die hochfrequente Entkopplung.

Wegen der Anordnung des Panschers in der Ausgleichskammer sind die Parameter Panscherdurchmesser, Panscherspalt und Spaltlänge, die die dynamischen Eigenschaften weitestgehend bestimmen, frei wählbar. Wird ein an der Tragfeder angeordneter Panscher angewendet, ist der Panscherspalt zwischen dem Panscher und der Außenwand der Ausgleichskammer gebildet. Dieser Panscherspalt ist unabhängig von der Position des Panschers. Somit werden von der Einsenkung des Hydrolagers unabhängige dynamische Eigenschaften erreicht.

In vorteilhafter Weiterbildung ist der Panscher an der Außenwand in Richtung einer Mittelachse des Motorlagers verschieblich geführt. Anschläge oder Befestigungselemente für den Panscher können eingespart werden, so daß sich die Montage vereinfacht und das Gewicht verringert. Die Doppelfunktionen des Panschers als Radialanschlag und zur hochfrequenten Entkopplung wird nicht beeinträchtigt.

Vorteilhaft weist der Panscher eine einvulkanisierte Blattfeder zur Erhöhung der Radialsteifigkeit auf. Die Blattfeder kann einfach in den Panscher einvulkanisiert werden und ermöglicht eine Anpassung der Radialsteifigkeit an die herrschenden Randbedingungen.

Gemäß einer vorteilhaften Weiterbildung weist das Motorlager mindestens einen Axialanschlag zur Begrenzung der Bewegung der Tragfeder in Richtung seiner Mittelachse auf. Der Axialanschlag verhindert unzulässig große Bewegungen der Tragfeder und damit eine Beschädigung oder Zerstörung des Motorlagers.

In einer vorteilhaften Ausgestaltung ist der Axialanschlag als vorstehender Bereich eines Bodens des Gehäuses ausgebildet. Zusätzliche Bauteile sind nicht erforderlich. Hierdurch werden Herstellung und Montage des erfindungsgemäßen Zweikammer-Motorlagers vereinfacht.

Gemäß einer vorteilhaften Weiterbildung ist der Axialanschlag starr mit dem Gehäuse verbunden und ragt radial von diesem ab. Die Außenabmessungen des erfindungsgemäßen Zweikammer-Motorlagers werden klein gehalten.

Vorteilhaft werden beide Axialanschläge derart miteinander kombiniert, daß sie die Bewegungen der Tragfeder in zwei einander entgegengesetzte Richtungen begrenzen. Unzulässige Bewegungen der Tragfeder werden hierdurch sowohl zum Motor als auch zur Karosserie hin vermieden.

Vorteilhaft wirkt der erste Axialanschlag mit einem einteilig mit der Tragfeder ausgebildeten Ansatz zusammen, der zweite mit einem einteilig mit der Tragfeder ausgebildeten Panscher. Der Ansatz und der Panscher können bei der Herstellung der Tragfeder in einem Arbeitsgang an den Lagerkern anvulkanisiert werden.

Gemäß einer vorteilhaften Weiterbildung weist die Tragfeder einen Spalt auf, in dem eine bewegliche Entkopplungsmembran mit Spiel aufgenommen ist. Diese Entkopplungsmembran bewirkt wie der Panscher eine Absenkung der dynamischen Steifigkeit in einem bestimmten Frequenzbereich. Vorteilhaft ist der Panscher derart ausgebildet, daß er eine hochfrequente Entkopplung in einem ersten Frequenzbereich bewirkt, während eine hochfrequente Entkopplung in einem zweiten Frequenzbereich durch die Entkopplungsmembran erreicht wird. Hierdurch wird eine Verbesserung des akustischen Verhaltens in zwei voneinander getrennten Frequenzbereichen ermöglicht. Alternativ können die Entkopplungsmembran und der Panscher für eine hochfrequente Entkopplung in demselben Frequenzbereich ausgelegt sein, so daß die dynamische Steifigkeit deutlich abgesenkt wird.

Vorteilhaft sind die Entkopplungsmembran und der Spalt parallel zu einer Mittelachse des Motorlagers angeordnet. Unter "parallel" wird in diesem Zusammenhang verstanden, daß die Entkopplungsmembran und der Spalt senkrecht zu einer Ebene verlaufen, die ihrerseits senkrecht zur Mittelachse des Motorlagers steht. Diese Ausgestaltung ermöglicht eine konstruktiv einfache Ausbildung und Montage.

Gemäß einer vorteilhaften Ausgestaltung weist die Entkopplungsmembran die Form eines Ringsegments auf. Die Entkopplungsmembran und der Spalt sind in dieser Ausgestaltung konzentrisch zur Mittelachse des Motorlagers angeordnet.

Vorteilhaft bildet die Tragfeder den Spalt begrenzende Stege und dazwischenliegende Kanäle zur Beaufschlagung der Entkopplungsmembran aus. Durch die Stege wird die Stabilität der Tragfeder gewährleistet, was bei Bereitstellen einer großen durchgehenden Öffnung zur Beaufschlagung der Entkopplungsmembran nur schwierig erreicht werden kann. Gleichzeitig ermöglichen die zwischen den Stegen liegenden Kanäle eine relativ großflächige Beaufschlagung der Entkopplungsmembran.

Vorteilhaft ist die Entkopplungsmembran aus einem gummielastischen Material, aus einem im wesentlichen starren Material oder aus einer Kombination dieser Materialien hergestellt. Durch die Wahl des Materials für die Entkopplungsmembran kann eine optimale Anpassung an unterschiedliche Randbedingungen erfolgen.

Nachfolgend wird die Erfindung anhand von Ausführungsbeispielen näher erläutert, die in schematischer Weise in der Zeichnung dargestellt sind. Dabei zeigt:
- Figur 1: einen Längsschnitt durch ein erfindungsgemäßes Zweikammer-Motorlager in einer ersten Ausführungsform;
- Figur 2: eine Ansicht ähnlich Figur 1 in einer zweiten Ausführungsform;
- Figur 3: eine Ansicht ähnlich Figur 1 in einer dritten Ausführungsform;
- Figur 4: einen Schnitt längs der Linie IV-IV in Figur 1;
- Figur 5: einen Schnitt längs der Linie V-V in Figur 1.

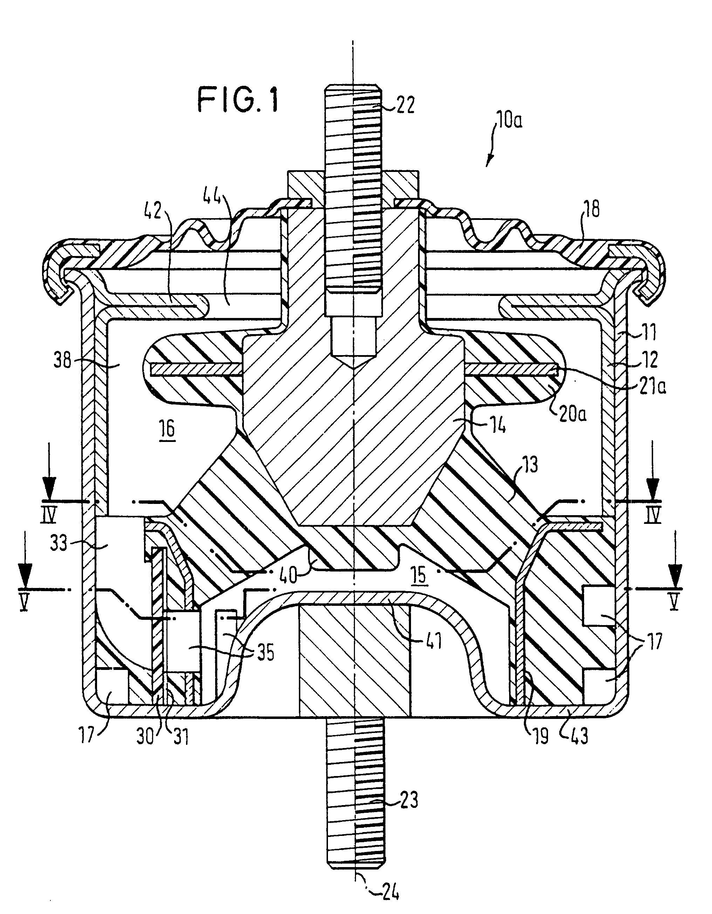

Figur 1 zeigt eine erste Ausführungsform eines erfindungsgemäßen Motorlagers 10a mit einem Gehäuse 11, in dessen Innenraum ein Einsatz 12 sowie eine Tragfeder 13 mit einem einvulkanisierten Lagerkern 14 eingesetzt sind. Die kegelförmige Tragfeder 13 unterteilt den Innenraum des Gehäuses 11 in eine Arbeitskammer 15 sowie eine Ausgleichskammer 16, die über einen Überströmkanal 17 miteinander verbunden sind. Der Überströmkanal 17 verläuft etwa spiralförmig entlang der Innenwandung des Gehäuses 11 durch die Tragfeder 13. Hierdurch wird eine große Länge des Überströmkanals 17 erreicht.

Die Ausgleichskammer 16 ist gegenüber der Umgebung durch eine gummielastische Membran 18 abgeschlossen. Zur Erhöhung der Stabilität der Tragfeder 13 ist eine Versteifung 19 vorgesehen.

In dieser Ausführungsform ist ein Panscher 20a vorgesehen, der einteilig mit der Tragfeder 13 ausgebildet ist. Der Panscher 20a weist zur Erhöhung der Radialsteifigkeit eine einvulkanisierte Blattfeder 21a auf.

Die Befestigung des Motorlagers 10a erfolgt mittels Bolzen 22, 23, die konzentrisch zur Mittelachse 24 des Motorlagers 10a angeordnet sind.

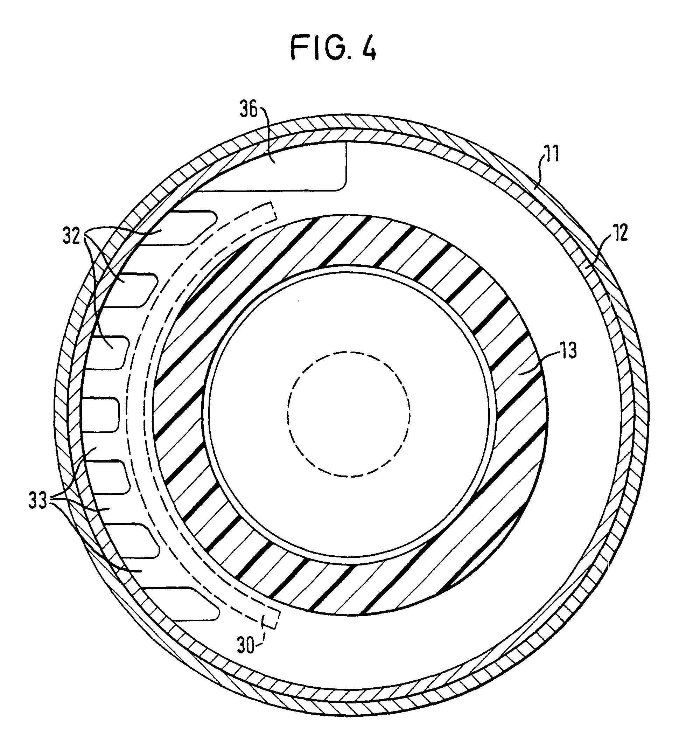

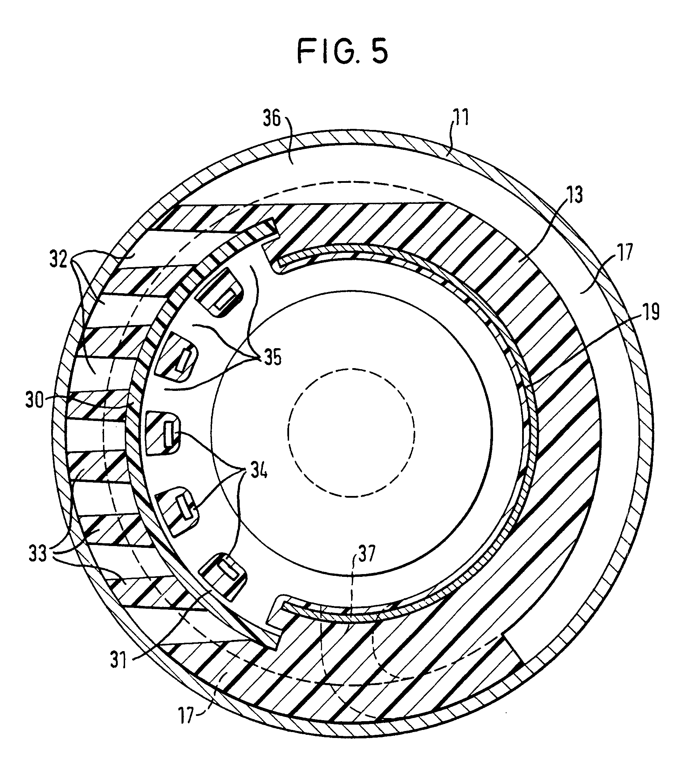

Zwischen der Arbeitskammer 15 und der Ausgleichskammer 16 ist eine Entkopplungsmembran 30 vorgesehen, die in einem Spalt 31 der Tragfeder angeordnet ist. Die Aufnahme und Wirkung der Entkopplungsmembran 30 werden anhand der Figuren 4 und 5 näher erläutert.

Zur Begrenzung der Bewegung des Lagerkerns 14 in Richtung der Mittelachse 24 sind zwei Axialanschläge 41, 42 vorgesehen. Der Axialanschlag 41 ist als vorstehender Bereich eines Bodens 43 des Gehäuses 11 ausgebildet und wirkt mit einem Ansatz 40 der Tragfeder 13 zusammen. Ein weiterer Axialanschlag 42, der starr mit dem Gehäuse 11 verbunden ist und radial von diesem abragt, begrenzt die Bewegung des Lagerkern 14 in Gegenrichtung. Bei unzulässig großen Bewegungen legt sich der Panscher 20a an dem Axialanschlag 42 an.

Der Axialanschlag 42 weist eine Öffnung 44 für den Lagerkern 14 auf. Die Größe der Öffnung 44 ist so gewählt, daß der Lagerkern 14 nicht in Kontakt mit dem Axialanschlag 42 kommt.

Die Arbeitskammer 15, die Ausgleichskammer 16 und der Überströmkanal 17 sind mit einer hydraulischen Flüssigkeit gefüllt. Bei einer Verschiebung des Lagerkerns 14 gegenüber dem Gehäuse 11 ändert sich das Volumen der Arbeitskammer 15, so daß die hydraulische Flüssigkeit durch den Überströmkanal 17 strömt. Die hydraulische Dämpfung wirkt der Bewegung des Lagerkerns 14 entgegen. Gleichzeitig strömt die hydraulische Flüssigkeit durch einen zwischen dem Panscher 20a und dem Einsatz 12 gebildeten Panscherspalt 38. Auch hier tritt hydraulische Dämpfung auf, die der Bewegung des Lagerkerns 14 entgegenwirkt. In Abhängigkeit von der Lage und Größe des Panscherspalts 38 bewirkt dieser eine Absenkung der dynamischen Steifigkeit. Gleichzeitig bewegt sich die Entkopplungsmembran 30 in dem Spalt 31, was ebenfalls zu einer Absenkung der dynamischen Steifigkeit führt.

Eine unzulässig große Bewegung des Lagerkerns 14 wird durch die Axialanschläge 41, 42 vermieden. Der Panscher 20a dient als Radialanschlag. Beim Einwirken von Kräften auf den Lagerkern 14, die nicht parallel zur Mittelachse 24 verlaufen, wird dieser radial ausweichen. Bei einer unzulässig großen radialen Ausweichbewegung kommit der Panscher 20a in Kontakt mit dem Einsatz 12 und wirkt einer weiteren Ausweichbewegung entgegen. Die Radialsteifigkeit des Panschers 20a wird durch die einvulkanisierte Blattfeder 21 erhöht, so daß unzulässige Verformungen oder Beschädigungen des Panschers 20a nicht zu befürchten sind. Die Blattfeder 21a kommt hierbei nicht in Kontakt mit dem Einsatz 12, da sie von der Tragfeder 13 überdeckt wird. Ein Klappern oder ähnliche unerwünschte Geräusche werden durch diese Überdeckung zuverlässig vermieden.

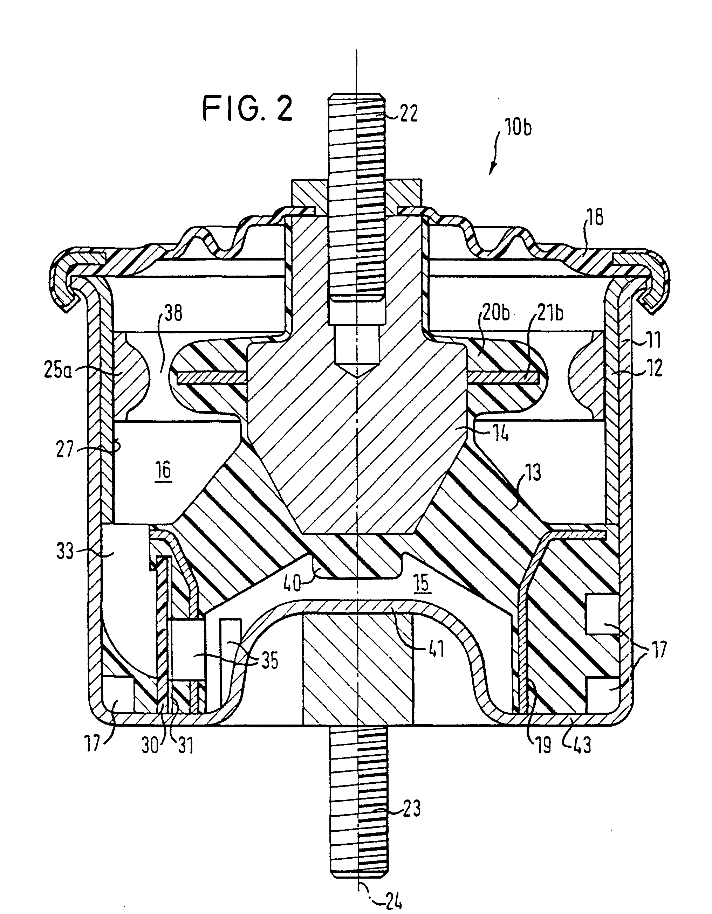

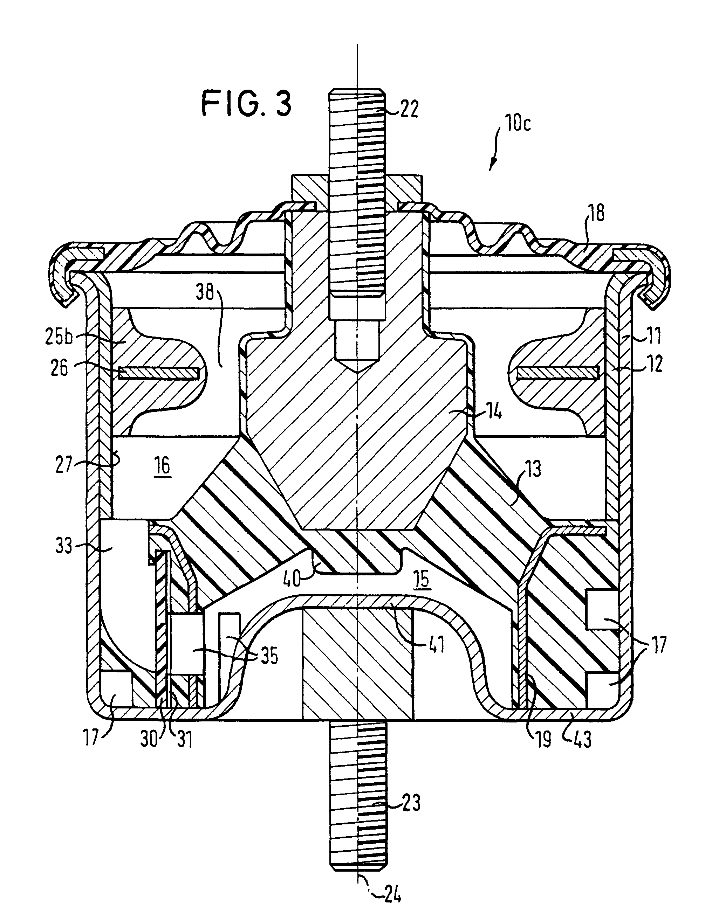

Die Figuren 2 und 3 zeigen weitere Ausführungsformen eines erfindungsgemäßen Motorlagers 10b, 10c. Gleiche oder ähnliche Bauteile sind hierbei mit denselben Bezugszeichen wie in Figur 1 versehen. Zur Erläuterung dieser Bauteile und deren Funktion wird zum Vermeiden von Wiederholungen auf die obenstehenden Ausführungen zu Figur 1 verwiesen.

In der Ausführungsform gemäß Figur 2 ist ein einteilig mit der Tragfeder 13 ausgebildeter Panscher 20b vorgesehen, der kleiner als der Panscher 20a der Ausführungsform gemäß Figur 1 ausgebildet ist. Der Panscher 20b weist eine einvulkanisierte Blattfeder 21b zur Erhöhung der Radialsteifigkeit auf.

In dieser Ausführungsform ist ein weiterer Panscher 25a vorgesehen, der an einer Außenwand 27 der Ausgleichskammer 16 angeordnet ist. Der Panscher 25a ist in Figur 2 an der Außenwand 27 in Richtung der Mittelachse 24 des Motorlagers 10b verschieblich. Zwischen den Panschern 20b, 25a bildet sich der Panscherspalt 38.

Das Verhalten des Motorlagers 10b unter Belastung, die hydraulische Dämpfung durch den Überströmkanal, die Entkopplungsmembran 30 sowie den Panscherspalt 38 erfolgen, wie anhand von Figur 1 beschrieben. Der Panscher 25a verschiebt sich in Abhängigkeit von den Flüssigkeitsströmen und der Dämpfung parallel zur Mittelachse 24 entlang der Außenwand 27. Weiter dient der Panscher 25a zusammen mit dem Panscher 20b als Radialanschlag.

Eine dritte Ausführungsform eines Motorlagers 10c, die in Figur 3 dargestellt ist, verwendet einen an der Außenwand 27 angeordneten Panscher 25b. Der Panscher 25b ist zur Erhöhung der Radialsteifigkeit mit einer einvulkanisierten Blattfeder 26 versehen. Der Panscherspalt 38 wird zwischen dem Panscher 25b und der den Lagerkern 14 umhüllenden Tragfeder 13 gebildet. Der weitere Aufbau und die Wirkungsweise der einzelnen Bauteile entsprechen denen der Ausführungsformen gemäß den Figuren 1 oder 2.

In den Figuren 4 und 5 sind die Aufnahme und Beaufschlagung der Entkopplungsmembran 30 näher dargestellt. Aufnahme und Wirkung sind für die in den Figuren 1 bis 3 dargestellten Ausführungsformen identisch.

Die Entkopplungsmembran 30 und der Spalt 31 in der Tragfeder 13 weisen die Form eines Ringsegments auf und sind konzentrisch zu der Mittelachse 24 angeordnet. Zur Beaufschlagung ist die Tragfeder 13 zur Ausgleichskammer 16 hin mit einer Reihe von Kanälen 32 und dazwischenliegenden Stegen 33 versehen. Durch die Kanäle 32 ist die hydraulische Flüssigkeit in der Ausgleichskammer 16 in Kontakt mit der Entkopplungsmembran 30.

An der der Arbeitskammer 15 zugewandten Seite bildet die Tragfeder Kanäle 35 mit dazwischenliegenden Stegen 34 aus. Die Kanäle 35 erlauben eine Beaufschlagung der Entkopplungsmembran 30 von der Arbeitskammer 15 aus.

Eine Verschiebung des Lagerkerns 14 gegenüber dem Gehäuse 11 verändert das Volumen der Arbeitskammer 15 und bewirkt hierdurch einen Druckunterschied zwischen der Arbeitskammer 15 und der Ausgleichskammer 16. Dieser Druckunterschied wirkt über die Kanäle 32, 35 auf die Entkopplungsmembran 30 und bewegt die Entkopplungsmembran 30 bei einem Überdruck in der Arbeitskammer 15 radial auswärts, bis sie sich an den Stegen 33 anlegt. Diese Lage ist in Figur 5 dargestellt. Ist der Druck in der Arbeitskammer 15 geringer als in der Ausgleichskammer 16, wird die Entkopplungsmembran 30 radial einwärts bewegt, bis sie sich an den Stegen 34 anlegt. Der Spalt 31 wird hierbei von den Stegen 33, 34 begrenzt.

Bei Bewegungen des Lagerkerns 14 mit nur geringen Amplituden, wie sie üblicherweise im Leerlauf eines Motors auftreten, verhindert die Entkopplungsmembran 30 eine Übertragung der Schwingungen des Lagerkerns 14 auf die Karosserie.

Bei Bewegungen des Lagerkerns 14 mit größerer Amplitude strömt die hydraulische Flüssigkeit durch den Überströmkanal 17, wobei sie hydraulisch gedämpft wird. Die hydraulische Dämpfung wirkt der Bewegung des Lagerkerns 14 entgegen. Der Überströmkanal 17 ist über eine Öffnung 36 mit der Ausgleichskammer 16 und eine weitere Öffnung 37 mit der Arbeitskammer 15 verbunden. In Abhängigkeit von der Bewegung des Lagerkerns 14 strömt die hydraulische Flüssigkeit aus der Arbeitskammer 15 in die Ausgleichskammer 16 oder in Gegenrichtung.

Das erfindungsgemäße Motorlager 10a, 10b, 10c ermöglicht eine Radialabstützung der Tragfeder durch den in der Ausgleichskammer vorgesehenen, als Radialanschlag ausgebildeten Panscher 20a, 20b, 25a, 25b. Der Panscher 20a, 20b, 25a, 25b bewirkt gleichzeitg eine Absenkung der dynamischen Steifigkeit, was das akustische Verhalten des erfindungsgemäßen Motorlagers 10a, 10b, 10c verbessert. Eine weitere Verbesserung des akustischen Verhaltens wird durch die Entkopplungsmembran 30 erreicht. Darüber hinaus ist das Motorlager 10a, 10b, 10c einfach und kostengünstig herzustellen und zu montieren.

## Patentansprüche

1. Zweikammer-Motorlager, insbesondere für Kraftfahrzeuge, mit einem Gehäuse (11), in dessen Innenraum eine Tragfeder (13) aus gummielastischem Material aufgenommen ist, die den Innenraum des Gehäuses (11) in eine Arbeitskammer (15) und eine gegenüber der Umgebung durch eine gummielastische Membran (18) abgeschlossene Ausgleichskammer (16) unterteilt, wobei die Arbeitskammer (15) und die Ausgleichskammer (16) mit einer hydraulischen Flüssigkeit gefüllt und über einen Überströrnkanal (17) miteinander verbunden sind, **dadurch gekennzeichnet, daß** in der Ausgleichskammer (16) mindestens ein als Radialanschlag ausgebildeter und zusätzlich zur hochfrequenten Entkoppelung dienender Panscher (20a; 20b, 25a; 25b) vorgesehen ist.

2. Zweikammer-Motorlager nach Anspruch 1, **dadurch gekennzeichnet, daß** der Panscher (20a; 20b) einteilig mit der Tragfeder (13) ausgebildet ist.

3. Zweikammer-Motorlager nach Anspruch 1 oder 2, **dadurch gekennzeichnet, daß** der Panscher (25a; 25b) getrennt von der Tragfeder (13) an einer Außenwand (27) der Ausgleichskammer (16) angeordnet ist.

4. Zweikammer-Motorlager nach Anspruch 3, **dadurch gekennzeichnet, daß** der Panscher (25a; 25b) an der Außenwand (27) in Richtung einer Mittelachse (24) des Motorlagers (10b; 10c) verschieblich geführt ist.

5. Zweikammer-Motorlager nach einem der vorhergehenden Ansprüche, **dadurch gekennzeichnet, daß** der Panscher (20a; 20b, 25b) eine einvulkanisierte Blattfeder (21a; 21b; 26) zur Erhöhung der Radialsteifigkeit aufweist.

6. Zweikammer-Motorlager nach Anspruch 1 bis 5, **dadurch gekennzeichnet, daß** das Motorlager (10a) mindestens einen Axialanschlag (41; 42) zur Begrenzung der Bewegung des Lagerkerns (14) in Richtung seiner Mittelachse (24) aufweist.

7. Zweikammer-Motorlager nach Anspruch 6, **dadurch gekennzeichnet, daß** der Axialanschlag (41) als vorstehender Bereich eines Bodens (43) des Gehäuses (11) ausgebildet ist.

8. Zweikammer-Motorlager nach Anspruch 6 oder 7, **dadurch gekennzeichnet, daß** der Axialanschlag (42) starr mit dem Gehäuse (11) verbunden ist und radial von diesem abragt.

9. Zweikammer-Motorlager nach einem der vorhergehenden Ansprüche, **dadurch gekennzeichnet, daß** die Tragfeder (13) einen Spalt (31) aufweist, in dem eine bewegliche Entkopplungsmembran (30) mit Spiel aufgenommen ist.

10. Zweikammer-Motorlager nach Anspruch 9, **dadurch gekennzeichnet, daß** die Entkopplungsmembran (30) und der Spalt (31) parallel zu einer Mittelachse (24) des Motorlagers (10a; 10b; 10c) angeordnet sind.

11. Zweikammer-Motorlager nach Anspruch 9 oder 10, **dadurch gekennzeichnet, daß** die Entkopplungsmembran (30) die Form eines Ringsegments aufweist.

12. Zweikammer-Motorlager nach einem der Ansprüche 9 bis 11, **dadurch gekennzeichnet, daß** die Tragfeder (13) den Spalt (31) begrenzende Stege (33, 34) und dazwischenliegende Kanäle (32, 35) zur Beaufschlagung der Entkopplungsmembran (30) ausbildet.

13. Zweikammer-Motorlager nach einem der Ansprüche 9 bis 12, **dadurch gekennzeichnet, daß** die Entkopplungsmembran (30) aus einem gummielastischen Material, aus einem im wesentlichen starren Material oder aus einer Kombination dieser Materialien hergestellt ist.

## Claims

1. A two-chamber engine mount, more particularly for automotive applications, comprising a housing (11) in the interior of which an elastomeric resilient mounting element (13) is accommodated which divides the interior of said housing (11) into a working chamber (15) and a compensating chamber (16) closed off from the environment by an elastomeric diaphragm (18), said working chamber (15) and said compensating chamber (16) being filled with a hydraulic fluid and interconnected via a transfer port (17), **characterized in that** in said compensating chamber (16) at least one plunger (20a; 20b, 25a; 25b) configured as a radial stop and additionally serving to decouple highfrequency oscillations is provided.

2. The two-chamber engine mount as set forth in claim 1, **characterized in that** said plunger (20a; 20b) is configured integrally with said resilient mounting element (13).

3. The two-chamber engine mount as set forth in claim 1 or 2, **characterized in that** said plunger (25a; 25b) is arranged separately from said resilient mounting element (13) at an outer wall (27) of said compensating chamber (16).

4. The two-chamber engine mount as set forth in claim 3, **characterized in that** said plunger (25a; 25b) is shiftingly guided at said outer wall (27) in the direction of the longitudinal centerline (24) of said engine mount (10b;10c).

5. The two-chamber engine mount as set forth in any of the preceding claims, **characterized in that** said plunger (20a;20b,25b) comprises a leaf spring (21a;21b;26) vulcanized in place to enhance the radial stiffness.

6. The two-chamber engine mount as set forth in claim 1 to 5, **characterized in that** said engine mount (10a) comprises at least one axial stop (41;42) to limit the movement of the core (14) of the mount in the direction of longitudinal centerline (24) thereof.

7. The two-chamber engine mount as set forth in claim 6, **characterized in that** said axial stop (41) is configured as a portion protruding from a bottom (43) of said housing (11).

8. The two-chamber engine mount as set forth in claim 6 or 7, **characterized in that** said axial stop (42) is rigidly connected to said housing (11) and protruding radially therefrom.

9. The two-chamber engine mount as set forth in any of the preceding claims, **characterized in that** said resilient mounting element (13) comprises a gap (31) in which a movable decoupling diaphragm (30) is accommodated with clearance.

10. The two-chamber engine mount as set forth in claim 9, **characterized in that** said decoupling diaphragm (30) and said gap (31) are arranged parallel to a longitudinal centerline (24) of said engine mount (10a; 10b;10c).

11. The two-chamber engine mount as set forth in claim 9 or 10, **characterized in that** said decoupling diaphragm (30) has the shape of an annular segment.

12. The two-chamber engine mount as set forth in any of the claims 9 to 11, **characterized in that** said resilient mounting element (13) configures ridges (33, 34) bordering said gap (31) and furrows (32, 35) located in between for impinging on said decoupling diaphragm (30).

13. The two-chamber engine mount as set forth in any of the claims 9 to 12, **characterized in that** said decoupling diaphragm (30) is made of an elastomeric material, of a substantially rigid material, or of a combination of these materials.

## Revendications

1. Support de moteur à deux chambres, en particulier pour des véhicules automobiles, comportant un boîtier (11) dans le volume intérieur duquel est reçu un ressort porteur (13) en matériau présentant l'élasticité du caoutchouc qui subdivise le volume intérieur du boîtier (11) en une chambre de travail (15) et en une chambre de compensation (16) refermée vis-à-vis de l'environnement par une membrane (18) présentant l'élasticité du caoutchouc, la chambre de travail (15) et la chambre de compensation (16) étant remplies avec un liquide hydraulique et reliées l'une à l'autre via un canal de déversement (17), **caractérisé en ce qu**'il est prévu dans la chambre de compensation (16) au moins un plongeur-agitateur (20a ; 20b, 25a ; 25b) qui est réalisé sous forme de butée radiale et qui sert en supplément au découplage haute fréquence.

2. Support de moteur à deux chambres selon la revendication 1, **caractérisé en ce que** le plongeur-agitateur (20a ; 20b) est réalisé d'un seul tenant avec le ressort porteur (13).

3. Support de moteur à deux chambres selon l'une ou l'autre des revendications 1 et 2, **caractérisé en ce que** le plongeur-agitateur (25a ; 25b) est agencé de façon séparée du ressort porteur (13) sur une paroi extérieure (27) de la chambre de compensation (16).

4. Support de moteur à deux chambres selon la revendication 3, **caractérisé en ce que** le plongeur-agitateur (25a ; 25b) est guidé mobile en direction d'un axe central (24) du support de moteur (10b ; 10c) sur la paroi extérieure (27).

5. Support de moteur à deux chambres selon l'une des revendications précédentes, **caractérisé en ce que** le plongeur-agitateur (20a ; 20b, 25b) comprend un ressort à lame (21a ; 21b ; 26) vulcanisé dans celui-ci pour augmenter la rigidité radiale.

6. Support de moteur à deux chambres selon l'une des revendications 1 à 5, **caractérisé en ce que** le support de moteur (10a) comprend au moins une butée axiale (41 ; 42) pour limiter le mouvement du noyau de support (14) en direction de son axe central (24).

7. Support de moteur à deux chambres selon la revendication 6, **caractérisé en ce que** la butée axiale (41) est réalisée sous forme de zone en saillie d'un fond (43) du boîtier (11).

8. Support de moteur à deux chambres selon l'une ou l'autre des revendications 6 et 7, **caractérisé en ce que** la butée axiale (42) est reliée de façon rigide au boîtier (11) et fait radialement saillie de celui-ci.

9. Support de moteur à deux chambres selon l'une des revendications précédentes, **caractérisé en ce que** le ressort porteur (13) présente une fente (31) dans laquelle est reçue avec jeu une membrane de découplage mobile (30).

10. Support de moteur à deux chambres selon la revendication 9, **caractérisé en ce que** la membrane de découplage (30) et la fente (31) sont agencées parallèlement à un axe central (24) du support de moteur (10a ; 10b ; 10c).

11. Support de moteur à deux chambres selon l'une ou l'autre des revendications 9 et 10, **caractérisé en ce que** la membrane de découplage (30) présente la forme d'un segment annulaire.

12. Support de moteur à deux chambres selon l'une des revendications 9 à 11, **caractérisé en ce que** le ressort porteur (13) forme des barrettes (33, 34) délimitant la fente (31) et des canaux interposés (32, 35) pour solliciter la membrane de découplage (30).

13. Support de moteur à deux chambres selon l'une des revendications 9 à 12, **caractérisé en ce que** la membrane de découplage (30) est réalisée en matériau présentant l'élasticité du caoutchouc, en un matériau sensiblement rigide ou en une combinaison de ces matériaux.
